# EUROPÄISCHE PATENTSCHRIFT

(11) **EP 0 682 077 B1**
(45) Veröffentlichungstag und Bekanntmachung des Hinweises auf die Patenterteilung: **15.10.1997**
(21) Anmeldenummer: 95106773.5
(22) Anmeldetag: 05.05.1995
(51) Int. Cl.: C08L 25/02, C08J 9/18

(54) **Expandierbare Styrolpolymerisate**
Expandable styrene polymers
Polymères styréniques expansibles

(30) Priorität: 13.05.1994 DE 4416862
(43) Veröffentlichungstag der Anmeldung: 15.11.1995
(73) Patentinhaber: BASF Aktiengesellschaft, 67063 Ludwigshafen (DE)
(72) Erfinder: Henn, Rolf, Dr., D-68775 Ketsch (DE); Hahn, Klaus, Dr., D-67281 Kirchheim (DE); Deckers, Andreas, Dr., D-55234 Flomborn (DE); Loth, Wolfgang, Dr., D-67098 Bad Dürkheim (DE); Blumenstein, Uwe, Dr., D-55288 Schornsheim (DE); Schwaben, Hans-Dieter, Dr., D-67361 Freisbach (DE); Klement, Erich, D-64668 Rimbach (DE)

(56) Entgegenhaltungen:
- EP-A- 0 397 001
- EP-A- 0 468 215
- US-A- 5 272 182
- ANGEWANDTE MAKROMOLEKULARE CHEMIE, Bd. 58/59, 1977 BASEL CH, Seiten 175-198, A. ECHTE 'Teilchenbildung bei der Her- stellung von kautschukmodifiziertem Polystyrol'

## Beschreibung

Die Erfindung betrifft expandierbare Styrolpolymerisate, die zur Herstellung von elastischen Schaumstoffen geeignet sind.

Schaumstoffe auf Basis von expandierbaren Polystyrolpartikeln haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in in Formen zu Formteilen verschweißt.

Polystyrolschaumstoffe sind harte Schaumstoffe. Ihre geringe Elastizität ist für viele Anwendungen, beispielsweise auf dem Verpackungsgebiet, nachteilig, da der Schutz des verpackten Gutes gegen Schlag- und Stoßbeanspruchung nur unzureichend möglich ist und die als Verpackungsmittel verwendeten Schaumstofformteile bereits bei geringer Deformation brechen.

Es gab daher in der Vergangenheit bereits Versuche, die Elastizität von Polystyrolschaumstoffen zu erhöhen.

Ein Verfahren, Schaumstoffe aus Polystyrol zu elastifizieren, ist in EP-A-561 216 beschrieben. Hierbei werden Schaumstoffblöcke der Dichte 8 bis 12 kg/m³ in einer Richtung auf etwa 1/3 ihrer Abmessung komprimiert und danach wieder entspannt. Aus den so behandelten Blöcken geschnittene Platten besitzen eine erhöhte Elastizität und werden beispielsweise zur Trittschalldämmung verwendet.

Verfahrensbedingt ist jedoch eine Übertragung dieser Arbeitsweise auf Formteile kaum zu realisieren und wird daher nicht durchgeführt.

In US-A-4,424,285 und US-A-4,409,338 werden schäumbare Polystyrolpolymere beschrieben, die durch Polymerisation einer Lösung von 0,5 bis 4,0 Gew.-% Styrol-Butadien- bzw. Styrol-Butadien-Styrol-Blockcopolymeren in Styrol hergestellt werden und eine kurze Formkühlzeit aufweisen.

Die Elastizität der Schaumstoffe wird dadurch jedoch auf Grund der geringen Menge des zugesetzten Kautschuks nur unwesentlich erhöht.

Nach US-A-4,307134 und US-A-4,333,970 werden auf Polystyrolperlen Schalen aus Polystyrol-Polybutadien-Copolymeren unter teilweiser Pfropfung aufpolymerisiert und die so hergestellten Perlen mit Treibmittel imprägniert und anschließend expandiert. Die so hergestellten Schaumstoffe weisen jedoch eine unregelmäßige Zellstruktur und unzureichende mechanische Eigenschaften auf.

GB-A-1,220,611 beschreibt eine schäumbare Polymerzusammensetzung mit erhöhter Ölbeständigkeit, die aus einem Polystyrol- Polyacrylnitril-Copolymer und einem Polybutadien-Elastomer besteht, wobei das Polystyrol-Polyacrylnitril-Copolymer im Elastomer dispergiert ist und das Treibmittel unter Quellung und teilweiser Lösung in die Elastomerphase absorbiert wird. Derartige Schaumstoffe weisen jedoch unzureichende mechanische Eigenschaften auf.

In US-A-4,423,160 schäumbare, nicht klumpende expandierbare Styrolpolymerisate mit kurzer Abkühlzeit beschrieben, die durch Lösung von 0,5 bis 4,0 Gew.-% eines Blockcopolymeren aus 2 bis 50 Gew.-% Styrol und 50 bis 98 Gew.-% eines konjugierten Diens in Styrol und Polymerisation dieser Lösung in Suspension und Verschäumung der mit Treibmittel imprägnierten Partikel hergestellt werden.

Der Vorteil dieser Styrolpolymerisate liegt in der verkürzten Abkühlzeit, die Elastifizierung bleibt gering.

Allen beschriebenen Verfahren des Standes der Technik ist gemeinsam, daß das Treibmittel sehr schnell aus den Perlen diffundiert. Bereits nach wenigen Tagen kann der Treibmittelverlust so groß sein, daß eine Verschäumung der Perlen nicht mehr zu verwendbaren Schaumstoffen führt.

Die Aufgabe unserer Erfindung war es, expandierbare Styrolpolymerisate bereitzustellen, die zur Herstellung elastischer Schaumstoffe geeignet sind, auch nach längerer Lagerung keine oder nur geringe Treibmittelverluste aufweisen sowie recyclefähig sind.

Erfindungsgemäß wird die Aufgabe gelöst durch expandierbare Styrolpolymerisate für elastische Polystyrolschäume, enthaltend
a) 50 bis 90 Gew.-% Polystyrol und/oder eines Styrolcopolymerisates mit mindestens 50 Gew.-% einpolymerisiertem Styrol und α-Methylstyrol, kernhalogeniertem Styrol, kernalkyliertem Styrol, Acrylnitril, Ester der Acryl- oder Methacrylsäure eines Alkohols mit 1 bis 8 C-Atomen, N-Vinylcarbazol oder Maleinsäure(anhydrid) als Comonomeren,
b) 5 bis 30 Gew.-% eines styrollöslichen Elastomeren,
c) 5 bis 20 Gew.-% mindestens eines Block-Copolymerisats mit Styrol als einer Komponente und Butadien oder Isopren als der anderen Komponente,
d) 1 bis 15 Gew.-%, bezogen auf die Summe aus a), b) und c), eines niedrigsiedenden Treibmittels, sowie gegebenenfalls
e) übliche Zusatzstoffe in wirksamen Mengen,
wobei in den unverschäumten Polystyrolperlen die Komponente b) in Form von Zellteilchen und die Komponente c) in Form von Teilchen der mittleren Größe 0,2 bis 2 µm in der Polystyrolphase vorliegen.

Gegenstand der Erfindung sind demzufolge expandierbare Styrolpolymerisate für elastische Polystyrolschaume, enthaltend
a) 50 bis 90 Gew.-% Polystyrol und/oder eines Styrolcopolymerisates mit mindestens 50 Gew.-% einpolymerisiertem Styrol und α-Methylstyrol, kernhalogeniertem Styrol, kernalkyliertem Styrol, Acrylnitril, Ester der Acryl- oder Methacrylsäure eines Alkohols mit 1 bis 8 C-Atomen, N-Vinylcarbazol oder Maleinsäure(anhydrid) als Comonomeren,
b) 5 bis 30 Gew.-% eines styrollöslichen Elastomeren,
c) 5 bis 20 Gew.-% mindestens eines Block-Copolymerisats mit Styrol als einer Komponente und Butadien oder Isopren als der anderen Komponente,
d) 1 bis 15 Gew.-%, bezogen auf die Summe aus a), b) und c), eines niedrigsiedenden Treibmittels, sowie gegebenenfalls
e) übliche Zusatzstoffe in wirksamen Mengen,
wobei in den unverschäumten Polystyrolperlen die Komponente b) in Form von Zellteilchen und die Komponente c) in Form von Teilchen der mittleren Größe 0,2 bis 2 µm in der Polystyrolphase vorliegen.

Gegenstand der Erfindung sind weiterhin elastische Schaumstoffe der Dichte 5 bis 70 g/l, enthaltend
a) 50 bis 90 Gew.-% Polystyrol und/oder eines Styrolcopolymerisates mit mindestens 50 Gew.-% einpolymerisiertem Styrol und α-Methylstyrol, kernhalogeniertem Styrol, kernalkyliertem Styrol, Acrylnitril, Ester der Acryl- oder Methacrylsäure eines Alkohols mit 1 bis 8 C-Atomen, N-Vinylcarbazol oder Maleinsäure(anhydrid) als Comonomeren,
b) 5 bis 30 Gew.-% eines styrollöslichen Elastomeren
c) 5 bis 20 Gew.-%, mindestens eines Blockcopolymeren mit Styrol als einer Komponente und Butadien oder Isopren als der anderen Komponente sowie gegebenenfalls
e) übliche Zusatzstoffe in wirksamen Mengen.

In US-A 5 272 182 ist ein Konzentrat beschrieben aus
a) einem vinylaromatischen Polymer, z. B. einem kautschukmodifi zierten Polystyrol,
b) einer Mischung aus einem Styrol-Butadien-Blockcopolymeren un einem Kohlenwasserstoff-Extenderöl,
c) einem Treibmittel.

Dieses Konzentrat kann in einen thermoplastischen Kunststoff, z. B. Polystyrol, eingearbeitet werden, so daß sich eine schäumbare Zusammensetzung ergibt, die nach dem Spritzgußverfahren verschäumt wird. Dabei entstehen sogenannte Strukturschäume mit verhältnismäßig hoher Dichte. Eine Elastifizierung der Schäume wird nicht angestrebt und erreicht.

Die expandierbaren Styrolpolymerisate enthalten als Komponente a) 75 bis 98 Gew.-%, vorzugsweise 85 bis 93 Gew.-% Polystyrol und/ oder ein Styrolcopolymerisat mit mindestens 50 Gew.-%, vorzugsweise mindestens 80 Gew.-% einpolymerisiertem Polystyrol. Als Comonomere kommen in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft enthält das Polystyrol eine geringe Menge eines Vernetzers einpolymerisiert, d.h einer Verbindung mit mehr als einer, vorzugsweise 2 Doppelbindungen, wie Divinylbenzol, Butadien oder Butandioldiacrylat. Der Vernetzer wird im allgemeinen in Mengen von 0,005 bis 0,05 mol-%, bezogen auf Styrol, verwendet.

Zur Erzielung einer besonders hohen Expandierbarkeit ist es zweckmäßig, daß das Styrolpolymerisat ein mittleres Molekulargewicht M_{w} (Gewichtsmittel), gemessen nach der GPC-Methode, zwischen 100 000 und 200 000 aufweist, insbesondere zwischen 130 000 und 180 000. Verbesserte Verarbeitungseigenschaften weist der Schaumstoff dann auf, wenn die hochmolekulare Flanke des nach der GPC-Methode gemessenen Molekulargewichtsteilungskurve so steil ist, daß die Differenz der Mittelwerte (M_{Z+1}-M_{Z}) weniger als 150 000 beträgt. Die GPC-Methode ist beschrieben in G. Glöckler, Polymercharakterisierung, Chromatographische Methoden Band 17, Hüthig-Verlag, Heidelberg 1982. Die genannten Mittelwerte sind beschrieben in H.G. Elias, Makromoleküle, Hüthig-Verlag, Heidelberg 1971, Seiten 52-64.

Styrolpolymerisate, die die obengenannten mittleren Molgewichte aufweisen, können durch Mitverwendung von Reglern bei der Polymerisation erhalten werden. Als Regler verwendet man zweckmäßig 0,01 bis 1,5 Gew.-%, vorzugsweise 0,01 bis 0,5 Gew.-%, einer bromfreien organischen Verbindung mit einer Kettenübertragungskonstante K zwischen 0,1 und 50. Zweckmäßig wird der Regler während der Polymerisation erst bei einem Umsatz von 20 bis 90 % zugefügt, um eine steile hochmolekulare Flanke der Molekulargewichtsverteilungskurve zu erzielen.

Ein vorteilhaftes hohes Expansionsvermögen läßt sich auch dadurch erzielen, daß die Komponente a) 0,1 bis 10 Gew.-%, vorteilhaft 0,5 bis 10 Gew.-%, eines Styrolpolymeren mit einem mittleren Molekulargewicht (Gewichtsmittel) zwischen 500 und 5 000 enthält.

Weitere Details der Molekulargewichtsregelung bei der Herstellung expandierbarer Styrolpolymerisate sind der EP-B 106 129 zu entnehmen.

Styrolpolymerisate, die 0,1 bis 2 Gew.-%, vorzugsweise 0,15 bis 1,5 Gew.-%, einpolymerisiertes Acrylnitril enthalten, führen zu Schaumstoffen, die sich durch weitgehende Schrumpffreiheit auszeichnen. Auch ein Gemisch aus 95 bis 99,5 Gew.-% Polystyrol und 0,5 bis 5 Gew.-% eines styrollöslichen Styrol-Acrylnitril-Copolymeren zeigt diese Eigenschaften, wenn der Gesamtgehalt an Acrylnitril im Gemisch 0,1 bis 2 Gew.-%, vorzugsweise 0,15 bis 2 Gew.-% beträgt.

Styrolpolymerisate, die 3 bis 20 Gew.-%, vorzugsweise 5 bis 15 Gew.-% einpolymerisierbares Acrylnitril enthalten, führen zu Schaumstoffen mit hoher Ölbeständigkeit. Auch ein Gemisch aus 50 bis 85 Gew.-% Polystyrol und 15 bis 50 Gew.-% eines styrollöslichen Styrol-Acrylnitril-Copolymeren zeigt diese vorteilhafte Eigenschaft, wenn der Gesamtgehalt an Acrylnitril im Gemisch 3 bis 20 Gew.-%, vorzugsweise 5 bis 15 Gew.-%, beträgt. Die Herstellung derartiger Mischungen erfolgt auf einfache Weise dadurch, daß man vor der Polymerisation die vorgesehene Menge des Styrol-Acrylnitril-Copolymeren in Styrol löst.

Styrolpolymerisate, die 2 bis 15 Gew.-%, insbesondere 3 bis 12 Gew.-% Maleinsäure(anhydrid) als Comonomeres enthalten, führen zu Schaumstoffen, die sich durch hohe Wärmeformbeständigkeit auszeichnen. Vorteilhaft geht man dabei von einem Gemisch aus Polystyrol und einem handelsüblichen Styrol-Maleinsäureanhydrid-Copolymeren mit einem Maleinsäureanhydridgehalt von 15 bis 49 Gew.-% aus, das durch Lösen des Copolymeren in Styrol und anschließende Polymerisation leicht hergestellt werden kann.

Als Komponente b) kommen insbesondere styrollösliche Elastomere mit Glasübergangstemperaturen unter 20°C, vorzugsweise unter -10°C, insbesondere unter -20°C, zum Einsatz.

Das Elastomere ist im allgemeinen im wesentlichen unvernetzt gegebenenfalls nur soweit vernetzt, daß die Löslichkeit im Styrol nicht beeinträchtigt ist.

Vorzugsweise werden für die erfindungsgemäßen Styrolpolymerisate Polybutadien-Kautschuke eingesetzt, insbesondere solche mit Molekulargewichten von (Mw) von 200 000 bis 300 000 und einem Gehalt von < 50 % 1,4-cis Strukturen und einem Anteil von 1,2-Vinylstrukturen von 5 bis 20 % (medium-cis-Aufbau) oder einem Gehalt von >50 bis 99 % 1,4-cis Strukturen und einem Anteil von 1,2-Vinylstrukturen von < 5 % (high-cis-Aufbau).

Als Komponente c) werden übliche Blockcopolymerisate aus Styrol mit mindestens einem weiteren olefinisch ungesättigtem Monomeren eingesetzt, wobei der Styrolgehalt des Blockcopolymeren vorzugsweise mindestens 20 Gew.-%, bezogen auf die Summe der Monomeren, beträgt.

Als weitere olefinisch ungesättigte Monomere werden insbesondere solche mit einer oder zwei olefinischen Doppelbindungen eingesetzt, insbesondere Butadien, Isopren oder Mischungen daraus.

Die Blockcopolymere haben insbesondere einen Diblock- und/oder Triblock-Aufbau. Dabei kann es in der Polymerkette zwischen den Blöcken einen scharfen Übergang geben, es ist jedoch auch möglich, einen sogenannten verschmierten Übergang zwischen den Blöcken einzubauen. Bei dieser Struktur gibt es in der Polymerkette zwischen den Blöcken Bereiche, in denen die Monomeren statistisch angeordnet sind.

Die Polymerketten der Blockcopolymeren können linear, verzweigt oder dendritisch sein.

Weiterhin können auch Blockcopolymere eingesetzt werden, deren nach der Polymerisation verbliebene Doppelbindungen teilweise oder ganz hydriert wurden.

Weitere Angaben zu den verwendeten Blockcopolymeren und ihrer Herstellung finden sich beispielsweise in US-A-3,281,383.

Die expandierbaren Styrolpolymerisate enthalten in homogener Verteilung als Komponente d) 1 bis 15 Gew.-%, vorzugsweise 3 bis 10 Gew.-% eines niedrig siedenden Treibmittels. Die Treibmittel sollen das Polystyrol nicht lösen, aber in Polystyrol löslich sein. Der Siedepunkt soll unter dem Erweichungspunkt des Polystyrols liegen. Geeignete Treibmittel sind beispielsweise Propan, Butan, Pentan, Hexan, Cyclopentan, Cyclohexan, Octan, Dichlordifluormethan, Trifluorchlormethan und 1,1,1-Difluorchlorethan. Vorzugsweise wird Pentan verwendet.

Die expandierbaren Styrolpolymerisate können ferner übliche Zusatzstoffe e) in wirksamen Mengen enthalten, wie Farbstoffe, Füllstoffe, Stabilisatoren, Flammschutzmittel, Synergisten, Keimbildner, Gleitmittel, Antistatika, beim Verschäumen antiverklebend wirkende Stoffe und Mittel zur Verkürzung der Entformzeit beim Ausschäumen.

Als Zusatzstoffe sind auch Poly-(2,6-dimethyl)-1,4-phenylenether und Poly-1,4-phenylensulfid geeignet. In Mengen von 1 bis 20 Gew.-%, bezogen auf die Komponente a) bewirken diese Zusätze eine Erhöhung der Wärmeformbeständigkeit des Schaumstoffs.

Die expandierbaren Styrolpolymerisate liegen im allgemeinen in Form von Partikeln, d.h. in Perlform oder Granulatform vor und haben vorteilhaft einen mittleren Durchmesser von 0,1 bis 6 mm, insbesondere 0,4 bis 3 mm.

Bei den erfindungsgemäßen expandierbaren Styrolpolymerisaten liegt in den unverschäumten Polystyrolperlen die Komponente b) in Form von Zellteilchen und die Komponente c) in Form von Teilchen der mittleren Größe 0,2 bis 2 µm in der Polystyrolphase vor. Dabei sollten die Zellteilchen Durchmesser von 0,1 bis 10 µm, insbesondere 0,5 bis 5 µm, aufweisen.

Zellteilchen mit größeren Durchmessern oder andere morphologische Strukturen der Komponente b) in den expandierbaren Styrolpolymerisaten führen zu Treibmittelverlusten sowie zu ungleichmäßigen Strukturen der hergestellten Schaumstoffe.

Ausführungen zur Morphologie von elastomermodifizierten Styrolpolymerisaten finden sich in: Echte, Rubber-Toughened Styrene Polymers, Advances in Chemistry Series No. 222, 1989.

Die Herstellung der erfindungsgemäßen Styrolpolymerisate kann beispielsweise durch Vermischen der Komponenten a), b), c) und gegebenenfalls auch d) in der Schmelze, zumeist in einem Extruder erfolgen, wobei bei Zugabe von d) der Strang nach dem Auspressen so rasch abgekühlt werden muß, daß kein Aufschäumen erfolgt. Anschließend wird das erhaltene Styrolpolymerisat zerkleinert, zumeist durch Granulieren.

Weiterhin ist es möglich, die Komponenten b) und c) in Styrol zu lösen und diese Lösung zu polymerisieren.

Dabei werden die Komponenten b) und c) in Styrol gelöst und diese Lösung nach an sich bekannten Verfahren, zumeist unter Zusatz von radikalischen Initiatoren oder durch Wärmezufuhr, polymerisiert.

Es ist dabei auch möglich, Polymerisation in Masse bis zu einem Umsatz von ca. 30 % durchzuführen, das so erhaltene Vorpolymerisat auf bekannte Weise zu suspendieren (z.B. durch Zugabe von Wasser und Suspensionshilfsmittel) und die Polymerisation in Suspension zu Ende zu führen. Hierbei ist es vorteilhaft, während der Polymerisation in Suspension das Polymerisat mit dem Treibmittel zu imprägnieren. Auf diesem Weg erhält man ein perlförmiges Polymerisat, welches ohne weitere Behandlung zu Schaumstoffen verarbeitet werden kann.

Besonders günstige Ergebnisse werden erzielt, wenn die Styrolpolymerisate durch Polymerisation einer Lösung der Komponente b) in Styrol und Mischung des Polymerisates mit der Komponente c), insbesondere in der Schmelze, hergestellt werden.

Die Vermischung des Polymerisats aus a) und b) mit der Komponente c) kann insbesondere durch Extrusion erfolgen.

Anschließend muß das Styrolpolymerisat mit dem Treibmittel d) imprägniert werden.

Das kann durch Zusatz des Treibmittels in das geschmolzene Polymerisat erfolgen, beispielsweise beim Extrudieren, wobei auch hier ein Aufschäumen verhindert werden muß.

Vorteilhafterweise erfolgt der Treibmittelzusatz jedoch nach dem Imprägnierverfahren.

Dazu müssen die so erhaltenen Polymerisate auf Teilchengrößen von vorzugsweise 0,1 bis 6 mm, insbesondere 0,4 bis 3 mm gebracht werden. Dies erfolgt zweckmäßigerweise durch Granulieren nach der Extrusion.

Die Partikel liegen, abhängig von der Art der Granulierung, zumeist in Perlform oder Granulatform vor.

Zur Imprägnierung wird das Granulat in einer Flüssigkeit, zumeist Wasser, in Gegenwart der üblichen Hilfs- und Zusatzstoffe in einem Druckbehälter suspendiert, dieser inertisiert und auf eine Temperatur gebracht, die oberhalb des Erweichungspunktes, jedoch unterhalb des Schmelzpunktes des Polymeren liegt. Bei dieser Temperatur wird das Treibmittel aufgepreßt. Nach dem Abkühlen und Entspannen wird das imprägnierte Granulat abgetrennt und gereinigt.

Dieses Verfahren wird beispielsweise in EP-A-343 473 beschrieben.

Weitere Angaben zu den üblichen Herstellungsverfahren finden sich beispielsweise im Kunststoffhandbuch, Band 5, Polystyrol, herausgegeben von R. Vieweg und G. Daumiller, Carl-Hauser-Verlag München,1969.

Für die Herstellung von Schaumstoffen werden die expandierbaren Styrolpolymerisate in bekannter Weise durch Erhitzen auf Temperaturen oberhalb ihres Erweichungspunktes, beispielsweise mit Heißluft oder vorzugsweise mit Dampf, expandiert. Die erhaltenen Schaumstoffpartikel können nach dem Abkühlen und gegebenenfalls einer Zwischenlagerung durch erneutes Erhitzen weiter aufgeschäumt werden. Sie können abschließend in bekannter Weise in nicht gasdicht schließenden Formen zu Formteilen verschweißt werden.

Die erhaltenen Schaumstoffe weisen Dichten von 5 bis 70 g/l, insbesondere 10 bis 35 g/l, auf.

Die aus den erfindungsgemäßen Styrolpolymerisaten hergestellten Schaumstoffe zeichnen sich durch eine hohe Elastizität aus. So besitzen sie ein Rückstellvermögen, das bis zu 90% bei viermaliger Stauchung, gemessen nach DIN 53 777, beträgt. Damit sind sie herkömmlichen Styrolpolymeren deutlich überlegen.

Die Treibmittelverluste der unverschäumten Perlen sind sehr gering. Auch nach einer Lagerung von mehreren Wochen war eine Verschäumung noch problemlos möglich.

Das ist um so überraschender, da bei Styrolpolymerisaten vergleichbarer Zusammensetzung, bei denen das Blockcopolymerisat durch Auflösung im Styrolmonomeren und Polymerisation dieser Lösung, sogenannte Interpolymerisation, in das Polymerisat eingearbeitet wurde, der Treibmittelverlust bereits nach sehr kurzer Zeit so stark war, daß eine Verschäumung nicht mehr möglich war.

Die vorgeschäumten Perlen sind von einer gleichmäßigen Zellstruktur und verschweißen beim Formprozeß ohne Bildung von Lunkern. Die so hergestellten Formkörper weisen eine ausgezeichnete Wärmeformbeständigkeit auf.

Darüber hinaus besitzen die erfindungsgemäßen Schaumstoffe eine überraschend gute Wärmedämmung, die bis zu 10 % besser ist als die konventioneller Polystyrole gleicher Dichte. Die Schäume und Formkörper sind problemlos recyclebar.

Die Erfindung soll an nachfolgenden Beispielen näher erläutert werden:

### Beispiel 1

8 Gew.-Teile eines Polybutadiens mit einem Molekulargewicht (Mw) 250 000 und einem Gehalt an 1,4-cis-Strukturen von 30,4 % wurden in 92 Gew.-Teilen Styrol gelöst und nach bekanntem Verfahren radikalisch polymerisiert.

Das entstandene Polymerisat hatte eine Viskositätszahl von 70 cm/g, eine Erweichungstemperatur (Vicat) von 93°C sowie einen Schmelzindex von 3,7 cm³/10 min bei 200°C.

Die Polybutadienphase war in Form von Zellteilchen mit Durchmessern von 0,5 bis 2,5 µm in der Polystyrolphase verteilt.

100 Gew.-Teile dieses Polymerisates wurden mit 18 Gew.-Teilen eines linearen, anionisch hergestellten Styrol/Butadien/Styrol-Blockcopolymeren mit einem Styrolgehalt von 30 Gew.-%,einem Molekulargewicht (Mw) von 92 000 und einem Schmelzindex von < 1 cm³/10 min bei 200°C und 5 kp (Cariflex® TR 1101 der Firma Shell AG) bei 180°C in einem Zweischneckenextruder der Firma Werner und Pfleiderer gemischt und durch eine Düsenplatte mit Bohrungen von 1 mm Durchmesser gepreßt. Die Stränge wurden in einem Wasserbad zum Erstarren gebracht und anschließend mittels rotierender Messer auf eine Teilchengröße von 2x2x2 mm granuliert.

In dem so hergestellte Blend lag die Polybutadienphase in Form von Zellteilchen mit Teilchengrößen von 1 bis 5 µm Durchmesser und die Styrol/Butadien/Styrol-Blockcopolymerphase in Form von Teilchen mit maze-Struktur mit Durchmessern von 0,1 bis 1,5 µm vor.

6000 g dieses Blends wurden zusammen mit 21 300 g vollentsalztem Wasser, 76 g Natriumpyrophosphat, 155 g Magnesiumsulfat - Heptahydrat und 50 g einer 40 Gew.-%-igen Lösung eines Alkylbenzolsulfonates (Mersolat® K 30, Bayer AG) in einen 50 l fassenden Rührkessel gegeben. Dieser wurde verschlossen, 2 mal durch Aufpressen von 1 atm Stickstoff inertisiert und unter Rühren bei 250 Upm auf 120 °C aufgeheizt. Nach Erreichen dieser Temperatur wurden während einer Dauer von 15 Minuten 600 g eines Gemisches aus 80 Gew.-% n-Pentan und 20 Gew.-% iso-Pentan in den Kessel gedrückt und weitere 10 Stunden bei 120 °C gerührt.

Nach dem Abkühlen und Entspannen wurde der Kesselinhalt abgelassen und die Perlen aufgefangen. Diese wurden 2 mal mit vollentsalztem Wasser gewaschen und durch Hindurchsaugen von Umgebungsluft mit einer Temperatur von 23 °C auf einer Vakuumnutsche getrocknet.

Die Perlen hatten einen Treibmittelanteil von 4,7 Gew.-% und einen Wassergehalt von 1,0 Gew.-%.

Nach eintägigem offenen Auslegen wurde bei einmaligem Vorschäumen von 7 Minuten Dauer eine Schüttdichte von 23,8 g/l erreicht.

Nach dreitägigem offenen Auslegen wurde bei gleichen Vorschäumbedingungen eine Schüttdichte von 24,7 g/l erreicht.

Der Schaum war in beiden Fällen von gleichmäßiger mittelfeiner Struktur.

Aus den vorgeschäumten Perlen wurde in einer von oben und unten bedampfbaren Presse in Formkörper mit einer Dichte von 23 g/l hergestellt.

Die Formkörper zeigten eine Rückstellung bei viermaliger Stauchung um 70 % eine Rückstellung von 88 % %(bestimmt nach DIN 53 577). Die Wärmeleitfähigkeit nach Poensgen (DIN 52 616) lag 6 % unter dem entsprechenden, bei gleichen Bedingungen bestimmten Wert des Standardpolystyrols Styropor® F 14 (BASF AG) gleicher Dichte.

### Beispiel 2

Aus 9 Gew.-Teilen Polybutadien mit einem Molekulargewicht (Mw) von 250 000 und einem Gehalt an 1,4-cis-Strukturen von 90 % und 91 Gew.-Teilen Styrol wurde wie in Beispiel 1 beschrieben ein Polymerisat mit einer Viskositätszahl von 80 cm³/g, einer Erweichungstemperatur (Vicat) von 95 °C und einem Schmelzindex von 3,4 cm³/10 min bei 200 °C und 10 kg hergestellt. Die Polybutadienphase war in Form von Zellteilchen mit Durchmessern von 0,5 bis 2,5 µm in der Polystyrolphase verteilt.

85 Gew.-Teile dieses Produkts wurden mit 15 Gew.-Teilen eines anionisch hergestellten Styrol-Butadien-Blockcopolymeren mit einem Styrolgehalt von 20 Gew.-% und einem Schmelzindex von 16 cm/19 min bei 170°C und 10 kp (Hybrar® VS-1 der Firma Kuraray) unter den in Beispiel 1 angegebenen Bedingungen im Extruder vermischt und zu einem Granulat der Größe 1x1x3 mm verarbeitet.

7500 g dieses Granulats wurden unter den in Beispiel 1 angegebenen Bedingungen mit 750 g einer Mischung aus 80 Gew.-% n-Pentan und 20 Gew.-% iso-Pentan sowie 150 g n-Heptan imprägniert, wobei die Temperatur im Unterschied zum Beispiel 1 150 °C betrug.

Nach der Aufarbeitung betrug der Treibmittelgehalt der Perlen 7,8 Gew.-% und der Wassergehalt 1,1 Gew.-%.

Nach eintägigem offenen Ausliegen wurde bei einmaligem Vorschäumen von10 Minuten eine Schüttdichte von 22,4 g/l erreicht. Nach dreitägiger offener Lagerung lag die Schüttdichte bei 25,1 g/l.

Der Schaum war in beiden Fällen von mittelfeiner, gleichmäßiger Struktur.

Die vorgeschäumten Perlen wurden ein zweites Mal für 2 Minuten zu einer Schüttdichte von 19,8 g/l aufgeschäumt und wie in Beispiel 1 beschrieben zu Formkörpern mit einer Dichte von 21 g/l verarbeitet.

Diese wiesen nach einer viermaligen Stauchung um 50 % eine Rückstellung von 86 % auf (DIN 53 577). Die Wärmeleitfähigkeit nach Poensgen (DIN 52 616) lag um 6 % unter der des Standardpolystyrols Styropor® F 14 (BASF AG) gleicher Dichte.

## Patentansprüche

1. Expandierbare Styrolpolymerisate für elastische Polystyrolschäume, enthaltend
a) 50 bis 90 Gew.-% Polystyrol und/oder eines Styrolcopolymerisates mit mindestens 50 Gew.-% einpolymerisiertem Styrol und α-Methylstyrol, kernhalogeniertem Styrol, kernalkyliertem Styrol, Acrylnitril, Ester der Acryl- oder Methacrylsäure eines Alkohols mit 1 bis 8 C-Atomen, N-Vinylcarbazol oder Maleinsäure(anhydrid) als Comonomeren,
b) 5 bis 30 Gew.-% mindestens eines styrollöslichen Elastomeren,
c) 5 bis 20 Gew.-% mindestens eines Block-Copolymerisats mit Styrol als einer Komponente und Butadien oder Isopren als der anderen Komponente,
d) 1 bis 15 Gew.-%, bezogen auf die Summe aus a), b) und c), eines niedrigsiedenden Treibmittels, sowie gegebenenfalls
e) übliche Zusatzstoffe in wirksamen Mengen,
wobei in den unverschäumten Polystyrolperlen die Komponente b) in Form von Zellteilchen und die Komponente c) in Form von Teilchen der mittleren Größe 0,2 bis 2 µm in der Polystyrolphase vorliegen.

2. Expandierbare Styrolpolymerisate nach Anspruch 1, dadurch gekennzeichnet, daß als Komponente b) styrollösliche Elastomere mit Glasübergangstemperaturen unter 20°C verwendet werden.

3. Expandierbare Styrolpolymerisate nach Anspruch 1, dadurch gekennzeichnet, daß als Komponente b) Polybutadien verwendet wird.

4. Expandierbare Styrolpolymerisate nach Anspruch 1, dadurch gekennzeichnet, daß als Komponente c) Styrol-Butadien-Block-Copolymere verwendet werden.

5. Expandierbare Styrolpolymerisate nach Anspruch 1, dadurch gekennzeichnet, daß die Komponente c) einen Styrolgehalt von mindestens 20 Gew.-%, bezogen auf c), aufweist.

6. Expandierbare Styrolpolymerisate nach Anspruch 1, dadurch gekennzeichnet, daß als Komponente c) Styrol-Butadien-Diblock-Copolymere verwendet werden.

7. Expandierbare Styrolpolymerisate nach Anspruch 1, dadurch gekennzeichnet, daß als Komponente c) Styrol-Butadien-Styrol-Triblock-Copolymere verwendet werden.

8. Expandierbare Styrolpolymerisate nach Anspruch 1, dadurch gekennzeichnet, daß als Komponente c) Gemische aus Styrol-Butadien-Diblock-Copolymeren und Styrol-Butadien-Styrol-Triblock-Copolymeren verwendet werden.

9. Verfahren zur Herstellung von expandierbaren Styrolpolymerisaten nach Anspruch 1, dadurch gekennzeichnet, daß man das Elastomere b) in Styrol löst, in an sich bekannter Weise polymerisiert und das Polymerlsat wie üblich aufarbeitet, das aufgearbeitete Polymerisat mit der Komponente c) in der Schmelze vermischt und in an sich bekannter Weise mit dem Treibmittel imprägniert.

10. Verfahren zur Herstellung von expandierbaren Styrolpolymerisaten nach Anspruch 8, dadurch gekennzeichnet, daß die Vermischung in der Schmelze mittels Extruder erfolgt.

11. Verfahren zur Herstellung von expandierbaren Styrolpolymerisaten nach Anspruch 1, dadurch gekennzeichnet, daß man das Elastomere b) in Styrol löst, diese Lösung bis zu einem Umsatz von ca. 30 % polymerisiert, durch Zugabe von Wasser und Suspensionshilfsmittel suspendiert, in wäßriger Suspension auspolymerisiert, das Polymerisat in an sich bekannter Weise aufarbeitet, mit der Komponente c) verblendet und in an sich bekannter Weise mit dem Treibmittel imprägniert.

12. Elastische Schaumstoffe der Dichte 5 bis 70 g/l, enthaltend
a) 50 bis 90 Gew.-% Polystyrol und/oder eines Styrolcopolymerisates mit mindestens 50 Gew.-% einpolymerisiertem Styrol und α-Methylstyrol, kernhalogeniertem Styrol, kernalkyliertem Styrol, Acrylnitril, Ester der Acryl- oder Methacrylsäure eines Alkohols mit 1 bis 8 C-Atomen, N-Vinylcarbazol oder Maleinsäure (anhydrid) als Comonomeren,
b) 5 bis 30 Gew.-% eines styrollöslichen Elastomeren
c) 5 bis 20 Gew.-% mindestens eines Blockcopolymeren mit Styrol als einer Komponente und Butadien oder Isopren als der anderen Komponente, sowie gegebenenfalls
e) übliche Zusatzstoffe in wirksamen Mengen.

13. Verfahren zur Herstellung von elastischen Schaumstofformteilen, dadurch gekennzeichnet, daß man expandierbare Styrolpolymerisate nach Anspruch 1 in Partikelform durch Erhitzen bei einer Temperatur oberhalb des Erweichungspunktes expandiert und die so erhaltenen Schaumstoffpartikel in nicht gasdicht abschließenden Formen durch Erhitzen miteinander verschweißt.

## Claims

1. An expandable styrene polymer for elastic polystyrene foams, comprising
a) from 50 to 90 % by weight of polystyrene and/or a styrene copolymer containing at least 50 % by weight of copolymerized styrene and α-methylstyrene, ring-halogenated styrene, ring alkylated styrene acrylonitrile, an ester of acrylic or methacrylic acid with an alcohol having 1 to 8 carbon atoms, N-vinylcarbazole, maleic acid or maleic anhydride as comonomer,
b) from 5 to 30 % by weight of at least one styrene-soluble elastomer,
c) from 5 to 20 % by weight of at least one block copolymer containing styrene as one component and butadiene or isoprene as the other component,
d) from 1 to 15 % by weight, based on the sum of a), b) and c), of a low-boiling blowing agent, and, if desired,
e) conventional additives in effective amounts,
where, in the unfoamed polystyrene beads, component b) is in the form of cell particles and component c) is in the form of particles having a mean size of from 0.2 to 2 µm in the polystyrene phase.

2. An expandable styrene polymer as claimed in claim 1, wherein component b) is a styrene-soluble elastomer having a glass transition temperature of below 20°C.

3. An expandable styrene polymer as claimed in claim 1, wherein component b) is polybutadiene.

4. An expandable styrene polymer as claimed in claim 1, wherein component c) is a styrene-butadiene block copolymer.

5. An expandable styrene polymer as claimed in claim 1, wherein component c) has a styrene content of at least 20% by weight, based on c).

6. An expandable styrene polymer as claimed in claim 1, wherein component c) is a styrene-butadiene two-block copolymer.

7. An expandable styrene polymer as claimed in claim 1, wherein component c) is a styrene-butadiene-styrene three-block copolymer.

8. An expandable styrene polymer as claimed in claim 1, wherein component c) is a mixture of a styrene-butadiene two-block copolymer and a styrene-butadiene-styrene three-block copolymer.

9. A process for the preparation of an expandable styrene polymer as claimed in claim 1, wherein the elastomer b) is dissolved in styrene and polymerized in a manner known per se, the polymer is worked up in a manner known per se, the worked-up polymer is mixed with component c) in the melt, and the blend is impregnated with the blowing agent in a manner known per se.

10. A process for the preparation of an expandable styrene polymer as claimed in claim 8, wherein the mixing in the melt is carried out by means of an extruder.

11. A process for the preparation of an expandable styrene polymer as claimed in claim 1, wherein the elastomer b) is dissolved in styrene, this solution is polymerized to a conversion of about 30%, suspended through addition of water and suspension auxiliary and polymerized to completion in aqueous suspension, the polymer is worked up in a manner known per se and blended with component c), and the blend is impregnated with the blowing agent in a manner known per se.

12. An elastic foam having a density of from 5 to 70 g/l, comprising
a) from 50 to 90 % by weight of polystyrene and/or a styrene copolymer containing at least 50 % by weight of copolymerized styrene and α-methylstyrene, ring-halogenated styrene, ring alkylated styrene acrylonitrile, an ester of acrylic or methacrylic acid with an alcohol having 1 to 8 carbon atoms, N-vinylcarbazole, maleic acid or maleic anhydride as comonomer,
b) from 5 to 30 % by weight of a styrene-soluble elastomer,
c) from 5 to 20 % by weight of at least one block copolymer containing styrene as one component and butadiene or isoprene as the other component, and, if desired,
e) conventional additives in effective amounts.

13. A process for the preparation of an elastic foam molding, which comprises expanding an expandable styrene polymer as claimed in claim 1 in particle form by heating at a temperature above the softening point, and welding the resultant foam particles to one another by heating in molds which do not have a gas-tight seal.

## Revendications

1. Polymères du styrène expansibles pour mousses de polystyrène élastiques, contenant
a) 50 à 90% en poids de polystyrène et/ou d'un copolymère du styrène avec au moins 50% en poids de styrène incorporé par polymérisation et d'α-méthylstyrène, de styrène halogéné dans le noyau, de styrène alkylé dans le noyau, d'acrylonitrile, d'esters de l'acide acrylique ou de l'acide méthacrylique, d'un alcool qui comporte de 1 à 8 atomes de carbone, de N-vinylcarbazole, ou d'acide (anhydride) maléique, à titre de comonomères,
b) 5 à 30% en poids d'au moins un élastomère soluble dans le styrène,
c) 5 à 20% en poids d'au moins un copolymère séquencé avec le styrène, à titre d'un composant et du butadiène ou de l'isoprène, autre composant,
d) 1 à 15% en poids, par rapport à la somme de a), b) et c), d'un agent porogène, à bas point d'ébullition, comme aussi, éventuellement,
e) des additifs habituels en proportions actives,
où dans les perles de polystyrène qui n'ont pas moussé, le composant b) se présente sous forme de particules cellulaires et le composant c) se présente sous forme de particules, d'un calibre moyen de 0,2 à 2 µm, dans la phase de polystyrène.

2. Polymères du styrène expansibles suivant la revendication 1, caractérisés en ce que l'on utilise, à titre de composant b), des élastomères solubles dans le styrène avec des températures de transition vitreuse inférieures à 20°C.

3. Polymères du styrène expansibles suivant la revendication 1, caractérisés en ce que l'on utilise, à titre de composant b), le polybutadiène.

4. Polymères du styrène expansibles suivant la revendication 1, caractérisés en ce que l'on utilise, à titre de composant c), des copolymères séquencés de styrène-butadiène.

5. Polymères du styrène expansibles suivant la revendication 1, caractérisés en ce que le composant c) présente une teneur en styrène d'au moins 20% en poids, par rapport à c).

6. Polymères du styrène expansibles suivant la revendication 1, caractérisés en ce que l'on utilise, à titre de composant c), des copolymères diséquencés de styrène-butadiène.

7. Polymères du styrène expansibles suivant la revendication 1, caractérisés en ce que l'on utilise, à titre de composant c), des copolymères triséquencés de styrène-butadiène-styrène.

8. Polymères du styrène expansibles suivant la revendication 1, caractérisés en ce que l'on utilise, à titre de composant c), des mélanges de copolymères diséquencés de styrène-butadiène et de copolymères tri-séquencés de styrène-butadiène-styrène.

9. Procédé de préparation de polymères du styrène expansibles suivant la revendication 1, caractérisé en ce que l'on dissout l'élastomère b) dans le styrène, on le polymérise de manière en soi connue et on soumet le polymère au traitement habituel, on mélange le polymère ainsi apprêté au composant c), à l'état fondu et on imprègne le mélange de l'agent porogène de manière en soi connue.

10. Procédé de préparation de polymères du styrène expansibles suivant la revendication 8, caractérisé en ce que le mélange à l'état fondu s'effectue à l'aide d'une extrudeuse.

11. Procédé de préparation de polymères du styrène expansibles suivant la revendication 1, caractérisé en ce que l'on dissout l'élastomère b) dans du styrène, on polymérise cette solution jusqu'à une conversion d'environ 30%, on opère la mise en suspension par l'addition d'eau et d'un adjuvant de mise en suspension, on achève la polymérisation en suspension aqueuse, on traite le polymère d'une manière en soi connue, on le mélange au composant c) et on l'imprègne de l'agent porogène, de manière en soi connue.

12. Mousses élastiques d'une masse volumique de 5 à 70 g/l, contenant
a) 50 à 90% en poids de polystyrène et/ou d'un copolymère du styrène avec au moins 50% en poids de styrène incorporé par polymérisation et d'α-méthylstyrène, de styrène halogéné dans le noyau, de styrène alkylé dans le noyau, d'acrylonitrile, d'esters de l'acide acrylique ou de l'acide méthacrylique, d'un alcool qui comporte de 1 à 8 atomes de carbone, de N-vinylcarbazole, ou d'acide (anhydride) maléique, à titre de comonomères,
b) 5 à 30% en poids d'un élastomère soluble dans le styrène,
c) 5 à 20% en poids d'au moins un copolymère séquencé avec le styrène, à titre d'un des composants et du butadiène ou de l'isoprène, comme autre composant, ainsi qu'éventuellement
e) des additifs usuels en proportions actives.

13. Procédé de préparation d'articles moulés en mousse élastiques, caractérisé en ce que l'on fait gonfler ou mousser des polymères du styrène expansibles suivant la revendication 1, sous la forme de particules par chauffage, à une température supérieure au point de ramollissement et on soude mutuellement les particules de mousse ainsi obtenues dans des moules qui ferment de manière non étanche aux gaz, par chauffage.
